# EUROPÄISCHE PATENTSCHRIFT

(11) **EP 3 643 650 B1**
(45) Veröffentlichungstag und Bekanntmachung des Hinweises auf die Patenterteilung: **08.12.2021**
(21) Anmeldenummer: 19203460.1
(22) Anmeldetag: 16.10.2019
(51) Int. Cl.: B65H 5/08, B65B 5/06, B65B 43/44, B65B 41/04, B65G 17/32, B65H 7/14, B65H 7/18, B65H 5/02, B65H 5/38, B65H 5/36, B65H 5/34, B65G 43/08, B65H 3/04, B65H 5/14, B65H 7/06, B65H 9/10

(54) **VERFAHREN ZUM TAKTWEISEN VORSCHUB VON MATERIALZUSCHNITTEN IN EINER VERPACKUNGSMASCHINE**
METHOD FOR THE TIMED FEEDING OF MATERIAL BLANKS INTO A PACKAGING MACHINE
PROCÉDÉ D'AVANCEMENT DE MANIÈRE CADENCÉE DES DÉCOUPES DE MATÉRIAU DANS UNE MACHINE D'EMBALLAGE

(30) Priorität: 26.10.2018 DE 102018218385
(43) Veröffentlichungstag der Anmeldung: 29.04.2020
(73) Patentinhaber: MULTIVAC Sepp Haggenmüller SE & Co. KG, 87787 Wolfertschwenden (DE)
(72) Erfinder: GUGGENBERGER, Tobias, 87700 Memmingen (DE); KOVACS, Peter, 87700 Memmingen (DE); MAIER, Robert, 87727 Babenhausen (DE); MÖßNANG, Konrad, 87439 Kempten (DE); LAU, Christian, 88178 Heimenkirch (DE)
(74) Vertreter: Grünecker Patent- und Rechtsanwälte PartG mbB

(56) Entgegenhaltungen:
- EP-A2- 2 653 420
- US-A- 4 459 093
- US-A- 4 674 739
- US-A1- 2002 129 893

## Beschreibung

Die vorliegende Erfindung betrifft ein Verfahren zum Betrieb einer Verpackungsmaschine und eine ebensolche.

Verpackungsmaschinen, insbesondere für Lebensmittelprodukte, weisen üblicherweise neben Arbeitsstationen zum Befüllen und anschließendem Versiegeln von Verpackungen auch Arbeitsstationen zum Ausformen der Verpackung selbst, aus einem zugeführten Ausgangsmaterial, auf. So werden beispielsweise mittels Tiefziehverfahren aus einer geeigneten Unterfolie Verpackungsschalen ausgeformt, in welche anschließend ein Lebensmittelprodukt eingelegt und die Verpackungsschale mit einer Oberfolie luftdicht versiegelt wird. Da zunehmend die Verwendung alternativer Verpackungsmaterialien relevant wird, um Umweltverträglichkeit und Recyclingfähigkeit zu erhöhen, müssen auch die Verpackungsmaschinen zur Verwendung dieser Materialien angepasst werden. Bei der Verwendung von beispielsweise beschichtetem Karton als Ausgangsmaterial für ebene Verpackungsunterlagen wird dieser üblicherweise als Stapel oder Reihe von flächigen Materialzuschnitten angeliefert und muss mit einer passenden Materialzuführung der Verpackungsmaschine zugeführt werden.

Aus der US 4,674,739 ist eine Transportvorrichtung für Materialzuschnitte bekannt, bei welcher Materialzuschnitte in geöffnete Greifer eingeschoben und die Greifer geschlossen werden, wenn eine Geschwindigkeit der Greifer und der Materialzuschnitte im Wesentlichen gleich ist.

Aus der US 2002/0129893 A1 ist eine Vorrichtung zum Transport von Materialzuschnitten bekannt, wobei die Materialzuschnitte mittels schwenkbaren Klemmbacken an ihrem vorderen Ende gegriffen und entlang einer Förderrichtung bewegt werden.

EP 2 653 420 A2 offenbart außerdem die Merkmale des Oberbegriffs des Anspruchs 8.

Aufgabe der vorliegenden Erfindung ist es, ein Verfahren zum Betrieb einer Verpackungsmaschine bereitzustellen, welches eine insbesondere im Hinblick auf eine möglichst hohe Taktzahl effiziente Zuführung von Verpackungsmaterial in Form von flächigen Materialzuschnitten gewährleistet.

Die Aufgabe wird erfindungsgemäß gelöst durch ein Verfahren zum Betrieb einer Verpackungsmaschine gemäß Anspruch 1, sowie eine Verpackungsmaschine gemäß Anspruch 8. Vorteilhafte Weiterbildungen der Erfindung sind in den Unteransprüchen angegeben.

Ein erfindungsgemäßes Verfahren zum Betrieb einer Verpackungsmaschine umfasst folgende Verfahrensschritte:
- Vorschub einer Transportkette entlang einer Kettenumlenkung, wobei an der Transportkette Kettenklammern angeordnet sind, welche während des Vorschubs der Transportkette entlang einer Anlaufkontur bewegt werden, sodass mindestens eine der Kettenklammern geöffnet wird.
- Einbringen eines flächigen Materialzuschnitts in die mindestens eine geöffnete Kettenklammer mittels einer Zuführeinrichtung oder durch Mitnehmen des flächigen Materialzuschnitts mittels einer Verbindung mit einem dem flächigen Materialzuschnitt vorangehenden, zweiten Materialzuschnitt, wobei der Materialzuschnitt in die geöffnete Kettenklammer während einer Vorschubbewegung der Transportkette eintritt.
- Anschließend an das Einbringen:
   Schließen der Kettenklammer durch Verlassen der Anlaufkontur, sodass der Materialzuschnitt in der Kettenklammer fixiert ist.
- Dann wird der Materialzuschnitt zu einer Arbeitsstation mittels der Transportkette transportiert.

Die Verfahrensschritte sind dazu geeignet, in der hier dargestellten Reihenfolge ausgeführt zu werden.

Im Sinne der Erfindung ist "Transportkette" allgemein als endloses Transportmittel zu verstehen und kann beispielsweise auch einen Transportriemen umfassen.

Das Verfahren ermöglicht es, die Materialzuschnitte mit einem wohldefinierten Abstand zueinander oder auch ohne Abstand, quasi kontinuierlich, in der Transportkette aufzureihen. Durch die Vorschubbewegung findet die Positionsänderung der Kettenklammern entlang der Anlaufkontur statt, womit die Kettenklammern von einem geschlossenen zu einem offenen Zustand, und wieder zurück, wechseln. Dabei ist es sinnvoll, die Vorschubbewegung, welche ohnehin für die Bewegung eines Materialzuschnitts in die Arbeitsstation hinein und wieder hinaus stattfindet, zu nutzen. Somit wird die Taktzeit nicht verlängert und es können die maximal möglichen Taktleistungen erreicht werden.

Erfindungsgemäß erfolgt der Vorschub der Transportkette intermittierend. Da der Fertigungsprozess in der Arbeitsstation zumeist eine gewisse Zeit in Anspruch nimmt, steht während dieser Zeit auch die Transportkette still. Entsprechend erfolgt das Einschieben des Materialzuschnitts dazu synchronisiert, während einer Vorschubphase. Es ist also keine Anpassung der Bewegung der Transportkette nötig, sondern diese ist die Vorgabe, nach welcher die Einschubbewegung synchronisiert wird.

In einer bevorzugten Variante wird nach dem Einbringen des Materialzuschnitts in die geöffnete Kettenklammer der Materialzuschnitt mittels der Zuführeinrichtung temporär geschwindigkeitssynchron zum Vorschub der Transportkette bewegt. Dies erfolgt zweckmäßig, wenn die gewünschte Position mit Bezug zur Kettenklammer bereits erreicht ist. Dann wird damit diese Position gehalten und die Kettenklammer kann sich durch Verlassen der Anlaufkontur schließen und fixiert damit den Materialzuschnitt. So können definierte Abstände zwischen den Materialzuschnitten eingehalten werden und es findet keine Relativbewegung zwischen Transportkette und Materialzuschnitt statt, so dass dieser nicht gestaucht oder gestreckt wird.

Idealerweise erfolgt das Einbringen des Materialzuschnitts mit einer höheren Geschwindigkeit als der Geschwindigkeit der Transportkette. Somit kann die zurückzulegende Strecke überwunden werden, ohne dass die Transportkette bzw. die Taktgeschwindigkeit verlangsamt werden muss.

In einer gängigen Variante umfasst das Einbringen des flächigen Materialzuschnitts in die mindestens eine geöffnete Kettenklammer ein Einschieben und/oder ein Einlegen. So können verschiedene Systeme als Zuführeinrichtung verwendet werden, beispielsweise eine Vorschubeinrichtung oder ein Sauggreifer. Auch können Kettenklammern mit verschiedenartigen Öffnungsmechanismen verwendet werden.

In einer vorteilhaften Variante werden aufeinanderfolgende Materialzuschnitte mit einem wohldefinierten Abstand zueinander der Transportkette zugeführt. So können auch die Abmessungen und Arbeitsprozesse der Arbeitsstation vollständig berücksichtigt werden sowie Längentoleranzen der Materialzuschnitte ausgeglichen werden.

Vorzugsweise wird die Position des Materialzuschnitts, insbesondere die Ausgangsposition vor dem Einbringen in die Kettenklammer, mittels eines oder mehrerer Sensoren erfasst. So kann beispielsweise eine vorhandene Steuerung mittels Stellelementen in Reaktion auf die ermittelten Sensordaten für eine korrekte Positionierung des Materialzuschnitts sorgen.

In einer weiteren Variante wird der Materialzuschnitt mittels eines Führungselements und/oder eines Schiebers während des Einbringens in die Kettenklammer und/oder während der zur Transportkette synchronen Bewegung ausgerichtet. Somit wird eine korrekte Positionierung innerhalb der Kettenklammer sichergestellt.

Eine erfindungsgemäße Verpackungsmaschine umfasst mehrere Arbeitsstationen, beispielsweise eine Siegelstation und eine Schneidstation, eine Transportkette zum Transportieren eines flächigen Materialzuschnitts zu den Arbeitsstationen und eine Kettenumlenkung, auf welcher die Transportkette gelagert ist, wobei die Transportkette Kettenklammern mit jeweils einem Oberteil und einem Unterteil umfasst und das Oberteil und/oder das Unterteil schwenkbar und/oder verschiebbar ist, um die Kettenklammern zu öffnen und zu schließen. Der Materialzuschnitt ist in die geöffneten Kettenklammern einbringbar und in den geschlossenen Kettenklammern in diesen fixiert, sodass der Materialzuschnitt mittels der Transportkette entlang einer Transportrichtung bewegbar ist. Die Kettenumlenkung weist eine Anlaufkontur auf, welche dazu ausgebildet ist, mindestens eine Kettenklammer, welche sich entlang eines Abschnitts der Kettenumlenkung befindet, reversibel zu öffnen. Die Verpackungsmaschine umfasst desweiteren eine Zuführeinrichtung, welche dazu konfiguriert ist, den Materialzuschnitt in die geöffnete Kettenklammer einzubringen, und eine Steuerungseinheit, welche dazu konfiguriert ist, einen intermittierenden Vorschub der Transportkette zu veranlassen und die Transportkette und die Zuführeinrichtung so zu steuern und zu synchronisieren, dass der Materialzuschnitt in die geöffnete Kettenklammer eintritt, während die Transportkette eine Vorschubbewegung ausführt und anschließend an ein Einbringen des Materialzuschnitts die Kettenklammer durch Verlassen der Anlaufkontur geschlossen wird.

Als "Eintritt" des Materialzuschnitts in die geöffnete Kettenklammer wird hierbei der Moment bezeichnet, in welchem der Materialzuschnitt mit seiner Vorderkante einen hinteren Umriss der Kettenklammer in Transportrichtung passiert, also der Zeitpunkt, ab dem sich der Materialzuschnitt teilweise in der Kettenklammer befindet.

Das "Einbringen" bezeichnet den gesamten, von der Zuführeinrichtung veranlassten Bewegungsvorgang des Materialzuschnitts, bis dieser seine vorgesehene Endposition innerhalb der Kettenklammer erreicht hat. "Einbringen" bezeichnet also die Bewegung des Materialzuschnitts vor und nach dem "Eintritt".

Materialzuschnitt und Kettenklammer können sich nach dem Einbringen jedoch weiter synchron bewegen, sodass beispielsweise die Kettenklammer die Anlaufkontur verlassen und sich schließen kann, sie führen jedoch keine Relativbewegung zueinander mehr aus.

Erfindungsgemäß ist die Steuerungseinheit dazu konfiguriert, einen intermittierenden Vorschub der Transportkette zu veranlassen. Damit wird der Ablauf des Fertigungsprozesses in der Arbeitsstation berücksichtigt.

Üblicherweise ist die Steuerungseinheit dazu konfiguriert, die Zuführeinrichtung derart zu steuern, dass nach dem Einbringen des Materialzuschnitts in die geöffnete Kettenklammer der Materialzuschnitt mittels der Zuführeinrichtung temporär geschwindigkeitssynchron zum Vorschub der Transportkette bewegt wird.

In einer gängigen Variante ist die Anlaufkontur derart angeordnet, dass die Kettenklammer entlang eines Abschnitts im Bereich einer oberen Hälfte der Kettenumlenkung geöffnet wird, oder dass die Anlaufkontur verstellbar ist, um den Abschnitt entlang der Kettenumlenkung, in welchem die Kettenklammer geöffnet wird, einzustellen.

Bevorzugt umfasst die Zuführeinrichtung eine Vorschubeinrichtung, welche dazu konfiguriert ist, einen Materialzuschnitt in die geöffnete Kettenklammer einzuschieben, und/oder einen Sauggreifer, welcher dazu konfiguriert ist, den Materialzuschnitt in die geöffnete Kettenklammer einzulegen.

In einer gängigen Variante umfasst die Verpackungsmaschine einen oder mehrere Sensoren, welche dazu konfiguriert sind, Position und Ausrichtung des Materialzuschnitts zu erfassen.

Im Folgenden werden Ausführungsbeispiele der Erfindung anhand der Figuren näher beschrieben. Dabei zeigen
Figur 1: eine schematische Ansicht einer Verpackungsmaschine, bei welcher ein Materialzuschnitt in eine geöffnete Kettenklammer eingeschoben wird,
Figur 2: eine schematische Ansicht einer Verpackungsmaschine, bei welcher ein Materialzuschnitt mittels einer Verbindung mit einem vorangehenden Materialzuschnitt mitgenommen wird.

Einander entsprechende Komponenten sind in den Figuren jeweils mit gleichen Bezugszeichen versehen.

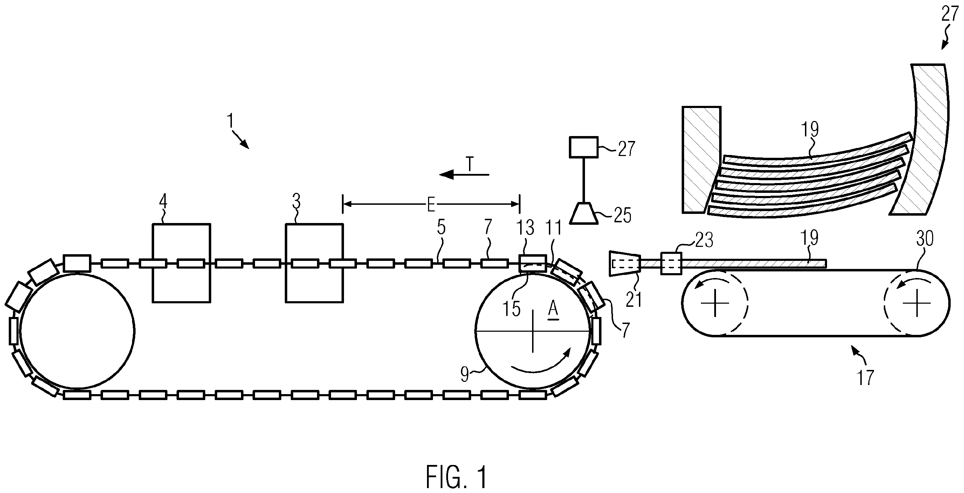

Figur 1 zeigt eine schematische Ansicht einer Verpackungsmaschine 1, mit zwei Arbeitsstationen 3, 4, beispielsweise einer Siegelstation 3 und einer Schneidstation 4, sowie einer Transportkette 5, an welcher Kettenklammern 7 zum Transport von Ausgangsmaterial für Verpackungen angeordnet sind. Die Transportkette 5 ist auf einer Kettenumlenkung 9 gelagert, an welcher eine Anlaufkontur 11 angeordnet ist, an der die Kettenklammern 7 während des Vorschubs der Transportkette 5 entlang laufen und von der Anlaufkontur 11 geöffnet werden. Dabei wird beispielsweise ein Oberteil 13 und/oder ein Unterteil 15 der Kettenklammer geschwenkt und/oder verschoben um die Kettenklammer 7 zu öffnen. Eine Zuführeinrichtung 17 bringt einen flächigen Materialzuschnitt 19 in Transportrichtung T in die geöffneten Kettenklammern 7 ein. Zur Ausrichtung des Materialzuschnitts 19 ist ein Führungselement 21 und ein Schieber 23 vorhanden. Die Position des Materialzuschnitts 19 wird mittels eines Sensors 25 überwacht. Eine Steuerungseinheit 27 kann durch Steuerung des Schiebers 23 den Materialzuschnitt 19 quer zur Transportrichtung T aktiv ausrichten. Zudem ist die Steuerungseinheit 27 dazu konfiguriert, die Transportkette 5 und die Zuführeinrichtung 17 so zu steuern, dass der Materialzuschnitt 19 in eine geöffnete Kettenklammer 7 eintritt, wenn die Transportkette 5 eine Vorschubbewegung ausführt. In der hier gezeigten Variante wird jeweils ein Materialzuschnitt 19 von einem Entstapler 29 vereinzelt und mittels der Zuführeinrichtung 17, welche hier eine förderbandartige Vorschubeinrichtung 30 umfasst, in die geöffneten Kettenklammern 7 eingeschoben. Dazu ist die Anlaufkontur 11 in einem Bereich einer oberen Hälfte A der Kettenumlenkung 9 angeordnet. Zwischen Kettenumlenkung 9 und Siegelstation 3 ist ein Einlegebereich E vorhanden, in welchem Produkte auf die Materialzuschnitte 19, welche als Produktauflagen bzw. Packungsunterteile geeignet sind, aufoder eingelegt werden. Im Einlegebereich E sind die Materialzuschnitte 19 in den geschlossenen Kettenklammern 7 fixiert.

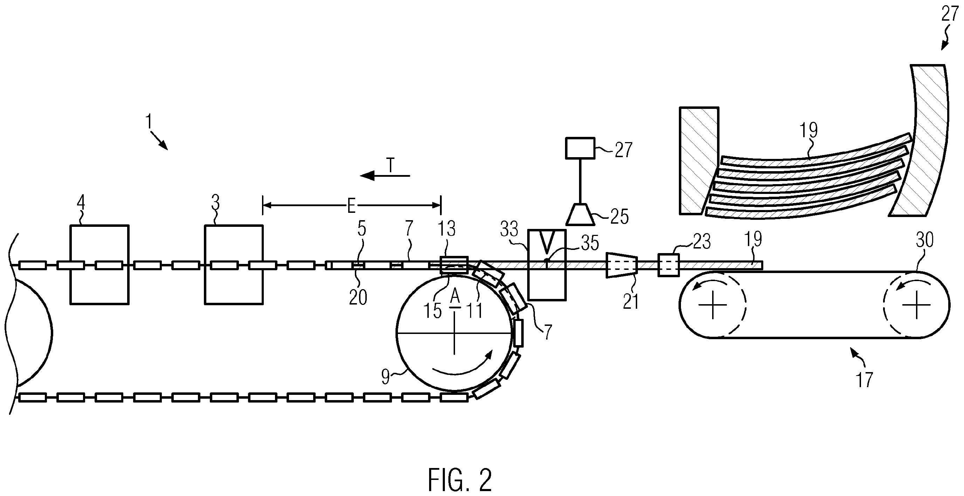

Figur 2 zeigt eine schematische Ansicht einer weiteren Ausführungsform einer Verpackungsmaschine 1, bei welcher ein zweiter Materialzuschnitt 20 bereits in die Kettenklammern 7 der Transportkette 5 eingebracht wurde, und durch die geschlossenen Kettenklammern 7 fixiert ist. Ein weiterer Materialzuschnitt 19 wurde mittels der Zuführeinrichtung 17 an den zweiten Materialzuschnitt 20 geschoben, so dass beide Materialzuschnitte 19, 20 miteinander in Kontakt sind. Eine Heftstation 33 bildet eine Verbindung 35 zwischen den Materialzuschnitten 19, 20 aus, wo diese sich mit jeweils einer Kante berühren, so dass die Materialzuschnitte 19, 20 stabil miteinander verbunden sind. Die Verbindung 35 kann beispielsweise eine oder mehrere Klebepunkte oder Heftungen umfassen. Der Vorschub der Transportkette 5, und damit des darin fixierten zweiten Materialzuschnitts 20, bewegt mittels der Verbindung 35 auch den Materialzuschnitt 19 und führt diesen so den geöffneten Kettenklammern 7 zu. Sodann wird auch der Materialzuschnitt 19 in den geschlossenen Kettenklammern 7 fixiert. Weitere Verbindungen 35 können dann jeweils zwischen den folgenden Materialzuschnitten 19 ausgebildet werden, wodurch sich ein kontinuierlicher Strom an Materialzuschnitten 19 ergibt.

Ausgehend von den oben dargestellten Ausführungsformen eines Verfahrens zum Betrieb einer Verpackungsmaschine 1 sind vielerlei Variationen desselben möglich. So ist es beispielsweise auch denkbar, den Materialzuschnitt 19 von schräg unten der geöffneten Kettenklammer 7, welche entsprechend geneigt an der Kettenumlenkung 9 positioniert ist, zuzuführen. Ein Materialzuschnitt 19 aus einem ausreichend flexiblen Material kann dann eine noch leicht gekrümmte Bewegung entlang der Kettenumlenkung 9 ausführen, bevor er in die vollständig horizontale Bewegung nach der Kettenumlenkung 9 übergeht.

## Patentansprüche

1. Verfahren zum Betrieb einer Verpackungsmaschine (1), umfassend folgende Verfahrensschritte:
- Intermittierender Vorschub einer Transportkette (5) entlang einer Kettenumlenkung (9), wobei an der Transportkette (5) Kettenklammern (7) angeordnet sind, welche während des Vorschubs der Transportkette (5) entlang einer Anlaufkontur (11) bewegt werden, sodass mindestens eine der Kettenklammern (7) geöffnet wird,
- Einbringen eines flächigen Materialzuschnitts (19) in die mindestens eine geöffnete Kettenklammer (7) mittels einer Zuführeinrichtung (17) oder durch Mitnehmen des flächigen Materialzuschnitts (19) mittels einer Verbindung (35) mit einem dem flächigen Materialzuschnitt (19) vorangehenden, zweiten Materialzuschnitt (20), wobei der Materialzuschnitt (19) in die geöffnete Kettenklammer (7) während einer Vorschubbewegung der Transportkette (5) eintritt,
- Anschließend an das Einbringen: Schließen der Kettenklammer (7) durch Verlassen der Anlaufkontur (11), sodass der Materialzuschnitt (19) in der Kettenklammer (7) fixiert ist,
- Transport des Materialzuschnitts (19) zu einer Arbeitsstation (3, 4) mittels der Transportkette (5).

2. Verfahren nach Anspruch 1, **dadurch gekennzeichnet, dass** nach dem Einbringen des Materialzuschnitts (19) in die geöffnete Kettenklammer (7) der Materialzuschnitt (19) mittels der Zuführeinrichtung (17) temporär geschwindigkeitssynchron zum Vorschub der Transportkette (5) bewegt wird.

3. Verfahren nach einem der vorangegangenen Ansprüche, **dadurch gekennzeichnet, dass** das Einbringen des Materialzuschnitts (19) mit einer höheren Geschwindigkeit als der Geschwindigkeit der Transportkette (5) erfolgt.

4. Verfahren nach einem der vorangegangenen Ansprüche, **dadurch gekennzeichnet, dass** das Einbringen des flächigen Materialzuschnitts (19) in die mindestens eine geöffnete Kettenklammer (7) ein Einschieben und/oder ein Einlegen umfasst.

5. Verfahren nach einem der vorangegangenen Ansprüche, **dadurch gekennzeichnet, dass** aufeinanderfolgende Materialzuschnitte (19) mit einem wohldefinierten Abstand zueinander der Transportkette (5) zugeführt werden.

6. Verfahren nach einem der vorangegangenen Ansprüche, **dadurch gekennzeichnet, dass** die Position des Materialzuschnitts (19), insbesondere die Ausgangsposition vor dem Einbringen in die Kettenklammer (7), mittels eines oder mehrerer Sensoren (25) erfasst wird.

7. Verfahren nach einem der vorangegangenen Ansprüche, **dadurch gekennzeichnet, dass** der Materialzuschnitt (19) mittels eines Führungselements (21) und/oder eines Schiebers (23) während des Einbringens in die Kettenklammer (7) und/oder während der zur Transportkette (5) synchronen Bewegung ausgerichtet wird.

8. Verpackungsmaschine (1) mit mehreren Arbeitsstationen (3, 4), einer Transportkette (5) zum Transportieren eines flächigen Materialzuschnitts (19) zu den Arbeitsstationen (3, 4) und einer Kettenumlenkung (9), auf welcher die Transportkette (5) gelagert ist, wobei die Transportkette (5) Kettenklammern (7) mit jeweils einem Oberteil (13) und einem Unterteil (15) umfasst und das Oberteil (13) und/oder das Unterteil (15) schwenkbar und/oder verschiebbar ist, um die Kettenklammern (7) zu öffnen und zu schließen, wobei der Materialzuschnitt (19) in die geöffneten Kettenklammern (7) einbringbar ist und in den geschlossenen Kettenklammern (7) in diesen fixiert ist, sodass der Materialzuschnitt (19) mittels der Transportkette (5) entlang einer Transportrichtung (T) bewegbar ist, und die Kettenumlenkung (9) eine Anlaufkontur (11) aufweist, welche dazu ausgebildet ist, mindestens eine Kettenklammer (7), welche sich entlang eines Abschnitts der Kettenumlenkung (9) befindet, reversibel zu öffnen, wobei die Verpackungsmaschine (1) eine Zuführeinrichtung (17) umfasst, welche dazu konfiguriert ist, den Materialzuschnitt (19) in die geöffnete Kettenklammer (7) einzubringen, **dadurch gekennzeichnet, dass** die Verpackungsmaschine (1) eine Steuerungseinheit (27) umfasst, welche dazu konfiguriert ist, einen intermittierenden Vorschub der Transportkette (5) zu veranlassen und die Transportkette (5) und die Zuführeinrichtung (17) so zu steuern und zu synchronisieren, dass der Materialzuschnitt (19) in die geöffnete Kettenklammer (7) eintritt, während die Transportkette (5) eine Vorschubbewegung ausführt und anschließend an ein Einbringen des Materialzuschnitts (19) die Kettenklammer (7) durch Verlassen der Anlaufkontur (11) geschlossen wird.

9. Verpackungsmaschine nach Anspruch 8, **dadurch gekennzeichnet, dass** die Steuerungseinheit (27) dazu konfiguriert ist, die Zuführeinrichtung (17) derart zu steuern, dass nach dem Einbringen des Materialzuschnitts (19) in die geöffnete Kettenklammer (7) der Materialzuschnitt (19) mittels der Zuführeinrichtung (17) temporär geschwindigkeitssynchron zum Vorschub der Transportkette (5) bewegt wird.

10. Verpackungsmaschine nach einem der Ansprüche 8 oder 9, **dadurch gekennzeichnet, dass** die Anlaufkontur (11) derart angeordnet ist, dass die Kettenklammer (7) entlang eines Abschnitts im Bereich einer oberen Hälfte (A) der Kettenumlenkung (9) geöffnet wird, oder dass die Anlaufkontur (11) verstellbar ist, um den Abschnitt entlang der Kettenumlenkung (9), in welchem die Kettenklammer (7) geöffnet wird, einzustellen.

11. Verpackungsmaschine nach einem der Ansprüche 8 bis 10, **dadurch gekennzeichnet, dass** die Zuführeinrichtung (17) eine Vorschubeinrichtung (30), welche dazu konfiguriert ist, einen Materialzuschnitt (19) in die geöffnete Kettenklammer (7) einzuschieben, umfasst.

12. Verpackungsmaschine nach einem der Ansprüche 8 bis 11, **gekennzeichnet durch** einen oder mehrere Sensoren (25), welche dazu konfiguriert sind, Position und Ausrichtung des Materialzuschnitts (19) zu erfassen.

## Claims

1. Method for operating a packaging machine (1) comprising the following method steps:
- intermittently advancing a transport chain (5) along a chain deflection (9), where chain clips (7) are arranged on said transport chain (5) and moved during the advancing motion of said transport chain (5) along a run-on contour (11), so that at least one of said chain clips (7) is opened.
- introducing a flat material blank (19) into said at least one open chain clip (7) by way of a feed device (17) or by entraining said flat material blank (19) by way of a connection (35) to a second material blank (20) preceding said flat material blank (19), where said material blank (19) enters said open chain clip (7) during an advancing motion of said transport chain (5).
- subsequent to the introducing: closing said chain clip (7) by leaving said run-on contour (11), so that said material blank (19) is secured in said chain clip (7).
- transporting said material blank (19) to a work station (3, 4) by way of said transport chain (5).

2. Method according to claim 1, **characterized in that**, once said material blank (19) has been introduced into said open chain clip (7), said material blank (19) is temporarily moved by way of said feed device (17) in a manner synchronized in speed to the advancing motion of said transport chain (5).

3. Method according to one of the preceding claims, **characterized in that** the introduction of said material blank (19) takes place at a higher speed than the speed of said transport chain (5).

4. Method according to one of the preceding claims, **characterized in that** introducing said flat material blank (19) into said at least one open chain clip (7) comprises a push-in and/or a placing process.

5. Method according to one of the preceding claims, **characterized in that** successive material blanks (19) are supplied to said transport chain (5) at a well-defined distance from each other.

6. Method according to one of the preceding claims, **characterized in that** the position of said material blank (19), in particular the starting position prior to the introduction into said chain clip (7), is detected by way of one or more sensors (25).

7. Method according to one of the preceding claims, **characterized in that** said material blank (19) is aligned by way of a guide element (21) and/or a pusher (23) during the introduction into said chain clip (7) and/or during the motion synchronous to said transport chain (5).

8. Packaging machine (1) with several work stations (3, 4), a transport chain (5) for transporting a flat material blank (19) to said workstations (3, 4) and a chain deflection (9) on which said transport chain (5) is mounted, where said transport chain (5) comprises chain clips (7) each having an upper part (13) and a lower part (15) and said upper part (13) and/or said lower part (15) is pivotable and/or slidable to open and close said chain clips (7), where said material blank (19) can be introduced into said open chain clips (7) and secured in said closed chain clips (7), so that said material blank (19) can be moved by way of said transport chain (5) along a direction of transport (T), and said chain deflection (9) comprises a run-on contour (11) which is configured to reversibly open at least one chain clip (7) which is disposed along a section of said chain guide (9), where said packaging machine (1) comprises a feed device (17) which is configured to introduce said material blank (19) into said open chain clip (7), **characterized in that** said packaging machine (1) comprises a control unit (27) which is configured to cause an intermittent advancing motion of said transport chain (5) and to control and synchronize said transport chain (5) and said feed device (17) such that said material blank (19) enters said open chain clip (7) while said transport chain (5) performs an advancing motion and subsequent to an introducing of the material blank (19) the chain clip (7) is closed by leaving the run-on contour (11).

9. Packaging machine according to claim 8, **characterized in that** said control unit (27) is configured to control said feed device (17) such that, after the introduction of said material blank (19) into said open chain clip (7), said material blank (19) is temporarily moved by way of said feed device (17) in a manner synchronized in speed to the advancing motion of said transport chain (5).

10. Packaging machine according to one of the claims 8 or 9, **characterized in that** said run-on contour (11) is arranged such that said chain clip (7) is opened along a section in the region of an upper half (A) of said chain deflection (9), or **in that** said run-on contour (11) is adjustable in order to adjust the section along said chain deflection (9) in which said chain clip (7) is opened.

11. Packaging machine according to one of the claims 8 to 10, **characterized in that** said feed device (17) comprises an advancing device (30) which is configured to push a material blank (19) into said open chain clip (7).

12. Packaging machine according to one of the claims 8 to 11, **characterized by** one or more sensors (25) which are configured to detect the position and orientation of said material blank (19).

## Revendications

1. Procédé de fonctionnement d'une machine d'emballage (1), comprenant les étapes de procédé ci-dessous :
- progression intermittente d'une chaîne de transport (5) le long d'un renvoi de chaîne (9), dans lequel des pinces de chaîne (7) sont agencées au niveau de la chaîne de transport (5) et sont déplacées le long d'un contour d'avancement (11) pendant la progression de la chaîne de transport (5) de sorte qu'au moins une des pinces de chaîne (7) est ouverte,
- insertion d'une ébauche de matériau (19) plate dans la au moins une pince de chaîne (7) ouverte au moyen d'un dispositif d'alimentation (17) ou par entraînement de l'ébauche de matériau (19) plate au moyen d'une liaison (35) avec une seconde ébauche de matériau (20) précédant l'ébauche de matériau (19) plate, dans lequel l'ébauche de matériau (19) pénètre dans la pince de chaîne (7) ouverte pendant un mouvement de progression de la chaîne de transport (5),
- après l'insertion : fermeture de la pince de chaîne (7) du fait qu'elle quitte le contour d'avancement (11), de sorte que l'ébauche de matériau (19) est immobilisée dans la pince de chaîne (7),
- transport de l'ébauche de matériau (19) vers un poste de travail (3, 4) au moyen de la chaîne de transport (5).

2. Procédé selon la revendication 1, **caractérisé en ce que**, après l'insertion de l'ébauche de matériau (19) dans la pince de chaîne (7) ouverte, l'ébauche de matériau (19) est déplacée temporairement au moyen du dispositif d'alimentation (17) avec une vitesse synchrone par rapport à la progression de la chaîne de transport (5).

3. Procédé selon l'une quelconque des revendications précédentes, **caractérisé en ce que** l'insertion de l'ébauche de matériau (19) s'opère à une vitesse supérieure à la vitesse de la chaîne de transport (5).

4. Procédé selon l'une quelconque des revendications précédentes, **caractérisé en ce que** l'insertion de l'ébauche de matériau (19) plate dans la au moins une pince de chaîne (7) ouverte comprend une introduction et/ou une mise en place.

5. Procédé selon l'une quelconque des revendications précédentes, **caractérisé en ce que** des ébauches de matériau (19) successives sont alimentées dans la chaîne de transport (5) en respectant un espacement bien défini.

6. Procédé selon l'une quelconque des revendications précédentes, **caractérisé en ce que** la position de l'ébauche de matériau (19), en particulier la position initiale avant l'insertion dans la pince de chaîne (7), est détectée au moyen d'un ou de plusieurs capteur(s) (25).

7. Procédé selon l'une quelconque des revendications précédentes, **caractérisé en ce que** l'ébauche de matériau (19) est orientée au moyen d'un élément de guidage (21) et/ou d'un coulisseau (23) pendant l'insertion dans la pince de chaîne (7) et/ou pendant le déplacement synchrone par rapport à la chaîne de transport (5).

8. Machine d'emballage (1) avec plusieurs postes de travail (3, 4), une chaîne de transport (5) permettant de transporter une ébauche de matériau (19) plate jusqu'aux postes de travail (3, 4) et un renvoi de chaîne (9) sur lequel est montée la chaîne de transport (5), dans laquelle la chaîne de transport (5) comprend des pinces de chaîne (7) présentant respectivement une partie supérieure (13) et une partie inférieure (15) et la partie supérieure (13) et/ou la partie inférieure (15) peut/peuvent être pivotée(s) et/ou déplacée(s) afin d'ouvrir et fermer les pinces de chaîne (7), dans laquelle l'ébauche de matériau (19) peut être insérée dans les pinces de chaîne (7) ouvertes et être immobilisée dans les pinces de chaîne (7) fermées de sorte que l'ébauche de matériau (19) peut être déplacée le long d'une direction de transport (T) au moyen de la chaîne de transport (5), et le renvoi de chaîne (9) présente un contour d'avancement (11) conçu pour ouvrir de manière réversible au moins une pince de chaîne (7) se trouvant le long d'une section du renvoi de chaîne (9), dans laquelle la machine d'emballage (1) comprend un dispositif d'alimentation (17) configuré pour insérer l'ébauche de matériau (19) dans la pince de chaîne (7) ouverte, **caractérisée en ce que** la machine d'emballage (1) comprend une unité de commande (27) configurée pour fournir une progression intermittente de la chaîne de transport (5) et pour commander et synchroniser la chaîne de transport (5) et le dispositif d'alimentation (17) de sorte que l'ébauche de matériau (19) pénètre dans la pince de chaîne (7) ouverte pendant que la chaîne de transport (5) effectue un mouvement de progression et, après l'insertion de l'ébauche de matériau (19), la pince de chaîne (7) est fermée du fait qu'elle quitte le contour d'avancement (11).

9. Machine d'emballage selon la revendication 8, **caractérisée en ce que** l'unité de commande (27) est configurée pour commander le dispositif d'alimentation (17) de telle manière que, après l'insertion de l'ébauche de matériau (19) dans la pince de chaîne (7) ouverte, l'ébauche de matériau (19) est déplacée temporairement au moyen du dispositif d'alimentation (17) avec une vitesse synchrone par rapport à la progression de la chaîne de transport (5).

10. Machine d'emballage selon la revendication 8 ou 9, **caractérisée en ce que** le contour d'avancement (11) est agencé de telle manière que la pince de chaîne (7) est ouverte le long d'une section dans la région d'une moitié supérieure (A) du renvoi de chaîne (9), ou **en ce que** le contour d'avancement (11) peut être réglé afin d'ajuster la section, située le long du renvoi de chaîne (9), au sein de laquelle la pince de chaîne (7) est ouverte.

11. Machine d'emballage selon l'une quelconque des revendications 8 à 10, **caractérisée en ce que** le dispositif d'alimentation (17) comprend un dispositif de progression (30) configuré pour introduire une ébauche de matériau (19) dans la pince de chaîne (7) ouverte.

12. Machine d'emballage selon l'une quelconque des revendications 8 à 11, **caractérisée par** un ou plusieurs capteur(s) (25) configuré(s) pour détecter la position et l'orientation de l'ébauche de matériau (19).
